(19)

Europäisches Patentamt
European Patent Office
Office européen des brevets

(11) **EP 3 561 569 A1**

(12) **EUROPEAN PATENT APPLICATION**

(43) Date of publication:
30.10.2019 Bulletin 2019/44

(51) Int Cl.:
*G02B 26/10* (2006.01)  *H02P 23/14* (2006.01)

(21) Application number: 18195246.6

(22) Date of filing: 18.09.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.04.2018 JP 2018085066

(71) Applicant: Hitachi, Ltd.
Tokyo 100-8280 (JP)

(72) Inventors:
• MATSUKA, Daisuke
Chiyoda-ku, Tokyo 100-8280 (JP)
• DOI, Akira
Chiyoda-ku, Tokyo 100-8280 (JP)
• TOKUYAMA, Mikio
Chiyoda-ku, Tokyo 100-8280 (JP)

(74) Representative: Mewburn Ellis LLP
City Tower
40 Basinghall Street
London EC2V 5DE (GB)

(54) **LIGHT DEFLECTOR AND LIGHT DEFLECTOR CONTROL DEVICE**

(57)     Provided is a light deflector deflecting a light beam, and including a reflector that reflects the light beam, a first gripper that grips one end of the reflector, a first driver that rotates a first rotating shaft coupled to the first gripper, a second gripper that grips the other end of the reflector, and a second driver that rotates a second rotating shaft coupled to the second gripper.

## FIG.1

EP 3 561 569 A1

**Description**

BACKGROUND OF THE INVENTION

1. Field of the Invention

The present invention relates to a light deflector for deflecting a light beam and a light deflector control device for controlling the light deflector.

2. Description of Related Art

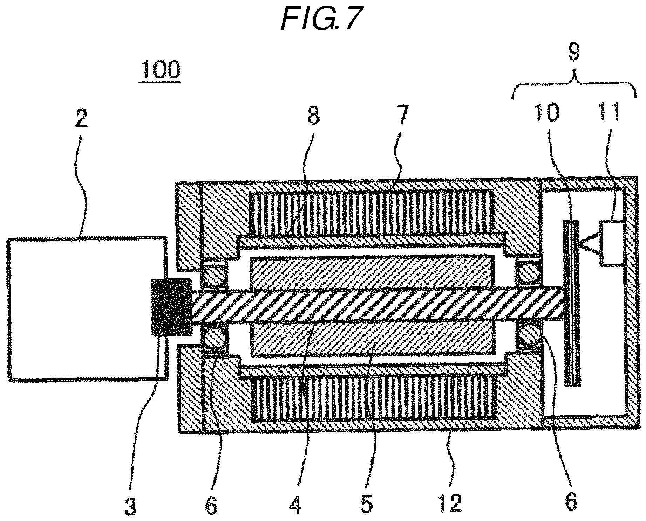

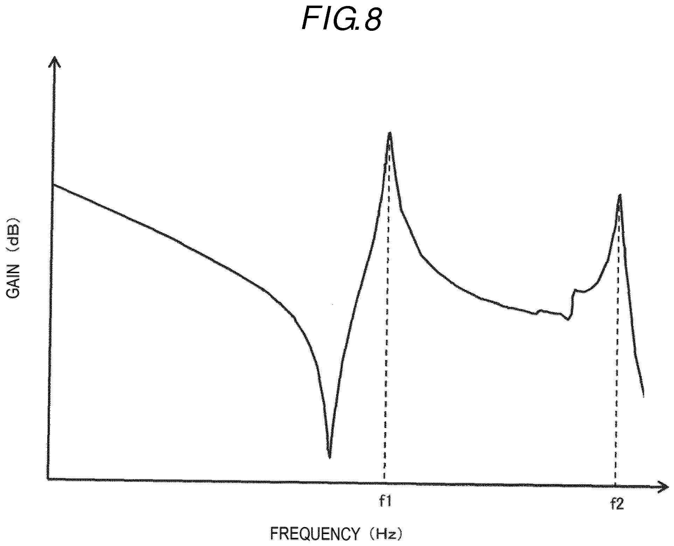

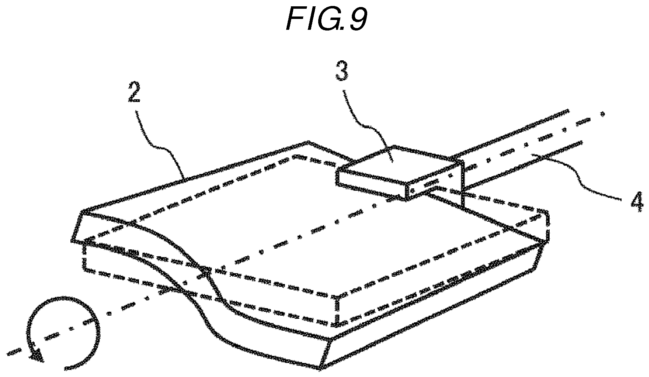

As a light deflector for deflecting a light beam, a galvano type light deflector is known. FIG. 7 is a cross-sectional view of a galvano type light deflector 100 of a movable magnet type in the related art. The galvano type light deflector 100 includes a reflector 2 that deflects a light beam, a gripper 3 that grips one end of the reflector 2, a rotating shaft 4 that couples one end thereof with the gripper 3, a permanent magnet 5 that is provided on an outer circumference of the rotating shaft 4, a pair of bearings 6 that support opposite ends of the rotating shaft 4, a yoke 7 that has a substantially cylindrical shape and is provided on an outer circumference of the permanent magnet 5, a coil 8 that is provided on an inner circumference of the yoke 7, an angle detector 9 that is provided close to the other end of the rotating shaft 4, and a housing 12 that covers these components. The angle detector 9 is made up of a scale 10 that has a substantially disk shape and is mounted on the other end of the rotating shaft 4, and an optical pickup 11 that reads slits in the scale 10.
The galvano type light deflector 100 configured as described above is a light deflector in which the reflector 2 and the scale 10 are rotated by the same rotation angle $\theta$ in conjunction with the rotation of the rotating shaft 4, and a torque generating source thereof is an oscillation type electromagnetic actuator that includes a rotor made up of the rotating shaft 4 and the permanent magnet 5, and a stator made up of the yoke 7 and the coil 8. When a predetermined voltage is applied to the coil 8 from a drive amplifier (not illustrated), an electromagnet force is generated by a predetermined current flowing to the coil 8 and a magnetic field of the permanent magnet 5, and the rotating shaft 4 is rotated by a predetermined rotation angle $\theta$. Thereby, the reflector 2 and the scale 10 are also rotated by the same rotation angle $\theta$. In this case, the angle detector 9 can detect the rotation angle $\theta$ of the reflector 2 based on an observation result of the scale 10 caused by the optical pickup 11. The galvano type light deflector 100 is a servo mechanism that realizes accurate positioning such that the rotation angle $\theta$ of the reflector 2 is consistent with a target angle $\theta_t$, and thus servo control caused by feedback using an output signal (hereinafter referred to as "angle detection signal $S_\theta$") of the angle detector 9 is performed.
As will be described below using FIGS. 8 and 9, the cantilever type galvano type light deflector 100 illustrated in FIG. 7 has a vibration mode (hereinafter referred to as "torsional vibration mode") in which the reflector 2 is twisted around the rotating shaft 4. This torsional vibration mode is excited by torque, and a magnitude of the torque increases in association with speed-up of an operation. When the torsional vibration mode is excited, asperity occurs on a reflecting surface of the reflector, and thus a cross section shape of the light beam is changed before and after reflection. This causes distortion of an image when the light deflector is used for an image transfer system, and is undesirable. For this reason, the light deflector was designed such that a frequency of the torsional vibration mode became sufficiently high with respect to an operation speed of the reflector in the related art, thereby avoiding occurrence of the torsional vibration mode.
For example, as technology for improving the frequency of the torsional vibration mode of the reflector, there is technology in which ribs are formed on a back surface of a reflector from a rotating shaft to an outer edge of the reflector (JP-A-1995-287184). There is technology in which a piezoelectric element is provided on a back surface of a reflector and is used as means for giving a deformation force, thereby controlling a torsional vibration mode of the reflector (JP-A-2011-154196).
However, in the technology (JP-A-1995-287184) in which the ribs are provided on the back surface of the reflector, the number of ribs or a thickness of each rib is increased, thereby expecting an improvement in rigidity. However, inertial is also increased in association with this, and thus an effect of improving a resonance frequency of the torsional vibration mode is restrictive.
In the technology (JP-A-2011-154196) in which the means for giving the deformation force is provided on the back surface of the reflector, a drive amplifier for driving the piezoelectric element and a power line are newly required, which is disadvantageous from the viewpoint of introduction easiness.

SUMMARY OF THE INVENTION

The present invention has been made in view of the above circumstances, and an object thereof is to provide a light deflector that controls asperity of a reflecting surface of a reflector due to a torsional vibration mode, and can thereby control distortion of an image reflected on the reflecting surface.

To solve the problem, a light deflector of the present invention deflects a light beam, and includes a reflector that reflects the light beam, a first gripper that grips one end of the reflector, a first driver that rotates a first rotating shaft coupled to the first gripper, a second gripper that grips the other end of the reflector, and a second driver that rotates a second rotating shaft coupled to the second gripper.

According to the present invention, torques are generated by a plurality of drivers disposed with a reflector interposed between rotating shafts, a resonance frequency of a vibration mode in which the reflector is twisted around the rotating shafts by the torques. Thus, even when the reflector is positioned at a high speed, occurrence of the torsional vibration mode can be controlled.

BRIEF DESCRIPTION OF THE DRAWINGS

FIG. 1 is a cross-sectional view illustrating key parts of a galvano type light deflector of a first embodiment;
FIG. 2 is a frequency response characteristic graph of the galvano type light deflector of the first embodiment;
FIG. 3 is a cross-sectional view illustrating key parts of a galvano type light deflector of a second embodiment;
FIG. 4 is a frequency response characteristic graph of the galvano type light deflector of the second embodiment;
FIG. 5 is a schematic view of a current controller of a galvano type light deflector control device of a third embodiment;
FIG. 6 is a control block diagram of a galvano type light deflector control device of a fourth embodiment;
FIG. 7 is a cross-sectional view illustrating key parts of a galvano type light deflector in the related art;
FIG. 8 is a frequency response characteristic graph of the galvano type light deflector in the related art; and
FIG. 9 is a mode deformation view (a schematic view) of a reflector of the galvano type light deflector in the related art.

DESCRIPTION OF EMBODIMENTS

Hereinafter, embodiments of the present invention will be described using the drawings. In the following embodiments, a plurality of divided embodiments will be described as needed for convenience. Unless otherwise stated, however, these embodiments are not irrelevant to each other, and one embodiment has a relation to some or all of the others in terms of modifications, details, or supplementary explanation thereof.

First embodiment

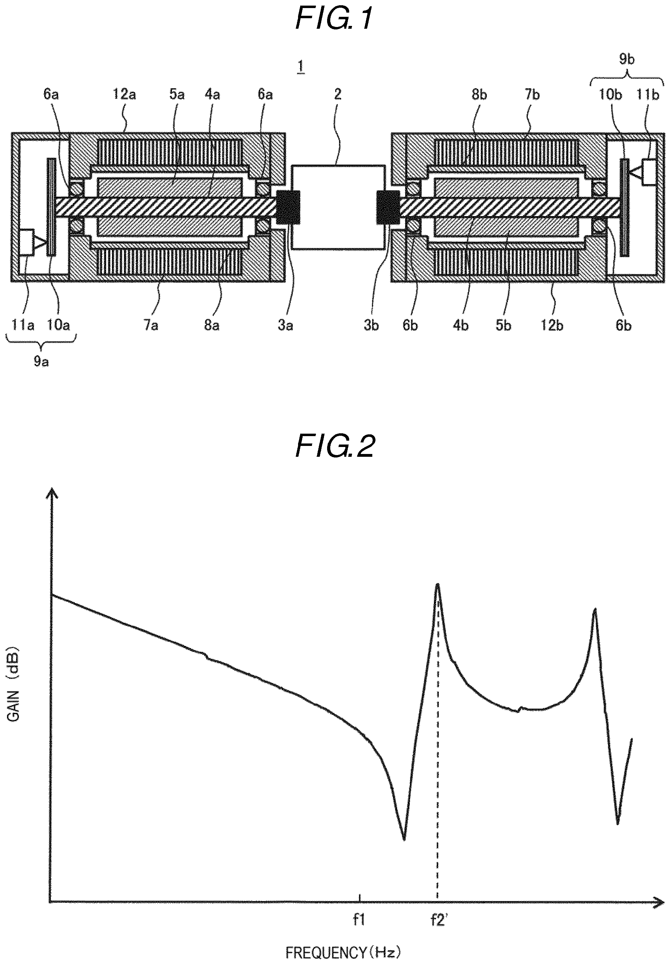

FIG. 1 is a cross-sectional view illustrating key parts of a galvano type light deflector 1 of a first embodiment. The galvano type light deflector 100 in the related art illustrated in FIG. 7 is configured such that one end of the reflector 2 is gripped by the gripper 3, and this gripper 3 is rotatably driven by the oscillation type electromagnetic actuator. The galvano type light deflector 1 of the present embodiment is configured such that opposite ends of the reflector 2 are gripped by grippers 3a and 3b, and these grippers 3a and 3b are rotatably driven in the same direction by a pair of oscillation type electromagnetic actuators. Hereinafter, a sign a is given to each component of the actuator for the gripper 3a, and a sign b is given to each component of the actuator for the gripper 3b. In addition, coils 8a and 8b are connected in series such that torques generated by two drivers when a drive current flows become the same direction.

Next, effects of the present embodiment will be described while enumerating problems of a configuration of the related art. FIG. 8 is a view illustrating an example of a frequency response characteristic (a gain characteristic) from a scanning amount to an angle detection signal of the galvano type light deflector 100 in the related art illustrated in FIG. 7. Here, since a drive amplifier for supplying a drive current to the coil 8 has a sufficient response characteristic with respect to a remarked frequency band, the scanning amount of the galvano type light deflector 100 is nearly identical to the drive current. In FIG. 8, it can be found that a vibration mode protrudes at positions of frequencies f1 and f2. That is, in the galvano type light deflector of the related art, the frequencies f1 and f2 are resonance frequencies.

FIG. 9 is a view illustrating torsional vibration mode deformation of the reflector 2 at the frequency f1 that is the resonance frequency. As illustrated here, when an positioning operation of the reflector 2 is performed counterclockwise with respect to the surface of paper, the left half surface of the reflector 2 receives an upward inertia force, and the right half surface of the reflector 2 receives a downward inertia force with respect to the rotating shaft 4. In this case, since the received inertia force is increased in proportion as a distance from the rotating shaft 4 increases, or a distance from the driver that produces the torque increases, a deformation amount is increased at a tip of the reflector 2.

Therefore, the torque of the same magnitude around the rotating shaft 4 is also produced at the tip of the reflector 2. Thus, in the present embodiment, as illustrated in FIG. 1, a pair of actuators are disposed on the rotating shaft at symmetrical positions between which the reflector 2 is interposed. As in FIG. 1, when the same torque is applied to the opposite ends of the reflector 2, the torsional vibration mode, which is generated at the frequency f1 and in which the deformation amount of the reflector 2 is maximized, is reduced in the galvano type light deflector 100 in the related art illustrated in FIG. 7, and a torsional vibration mode of a higher frequency than the frequency f1 becomes the torsional vibration mode of a lowest frequency. That is, since the frequency of the torsional vibration mode around the rotating shaft 4 can be increased, occurrence of the torsional vibration mode can be avoided even when the reflector 2 is rotated at a high speed.

FIG. 2 is a view more concretely illustrating effects of the configuration of the present embodiment, and is a view illustrating the frequency response characteristic from the scanning amount (approximately equal to a drive current) to the angle detection signal of the galvano type light deflector 1 of the present embodiment. As illustrated here, in the galvano type light deflector 1 of the present embodiment, a torsional vibration mode of a lowest frequency is changed to a frequency f2' that is about 1.3 times as high as the frequency f1 in the related art. As a result, in the galvano type light deflector 1 of the present embodiment, even if control over rotation of the reflector 2 in the vicinity of the frequency f1 is performed, an effect of controlling occurrence of the torsional vibration mode is confirmed. Thus, distortion of an image obtained through the reflector 2 can also be controlled.

In the present embodiment, two angle detectors 9 are provided. However, since the positioning operation is possible even in the case of one angle detector 9, any one of them may be removed. For example, when the right-hand angle detector 9b is removed, a weight of the same inertia as the scale 10b is added to a right end of the rotating shaft 4b such that the inertias around the left and right rotating shafts with the reflector 2 interposed therebetween are the same. Thereby, balance of and the torque generated by the left and right driver is the same, and the torsional vibration mode around the rotating shaft can be controlled.

In the present embodiment, the coils 8a and 8b of the left and right drivers are configured to be connected in series, and be able to be driven by one drive amplifier. However, the two coils 8a and 8b may be connected in parallel, and the drive currents having the same magnitude may be applied to the coils 8a and 8b by two independent drive amplifiers. In the present embodiment, the two drivers are configured to be disposed left and right. However, three or more drivers may be disposed to generate the same inertia at the left and right, and the same torque may be generated left and right.

According to the configuration of the present embodiment described above, the torsional vibration mode of the lowest frequency is shifted toward a higher frequency in comparison to the related art. Therefore, even when the reflector is controlled at a higher speed, the occurrence of the torsional vibration mode can be controlled, and the distortion of the image obtained through the reflector can also be controlled.

Second embodiment

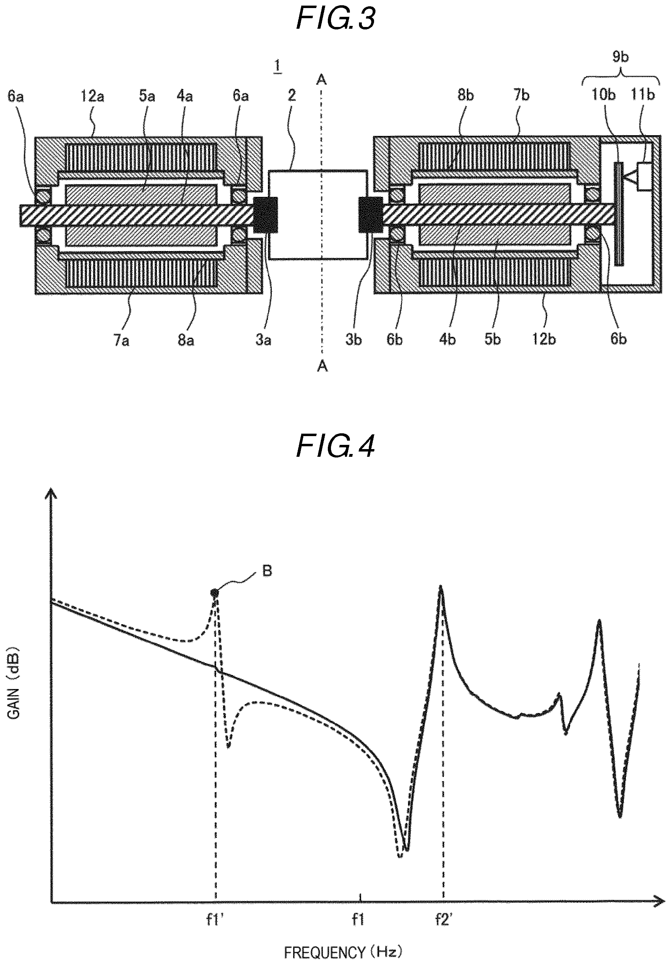

FIG. 3 is a cross-sectional view illustrating key parts of the galvano type light deflector 1 according to a second embodiment. A duplicate description of the features common between the first embodiment and the second embodiment will be omitted.

In comparison with the galvano type light deflector 1 of the first embodiment illustrated in FIG. 1, the present embodiment is different in that there is one angle detector 9, inertia ($J_R$) around the rotating shaft 4 on the right side of line A-A passing the center of the reflector 2 is greater than inertia ($J_L$) on the left side thereof, and a torque constant ($T_R$) of the right driver is greater than a torque constant ($T_L$) of the left driver. As an example, an example in which $J_L:J_R$ = 1.0:1.1, and $T_L:T_R$ = 1.0:1.1 will be described below.

A dotted line of FIG. 4 indicates the frequency response characteristic from the scanning amount (approximately equal to a drive current) to the angle detection signal when the left and right torques are set to be equal in the galvano type light deflector 1 of the present embodiment in which the left and right inertias of the reflector 2 are different. Frequencies f1 and f2' in FIG. 4 are the same as the frequencies f1 and f2' illustrated in FIG. 2.

In the frequency response characteristic graph indicated by a broken line of FIG. 4, the torsional vibration mode exists at a frequency f1' lower than the frequency f1, and this mode is a torsional vibration mode in which the center of the reflector 2 becomes a node of vibration, and left and right movable portions become antinodes. That is, in the configuration of FIG. 3, when the two drivers generate the same torque, the right inertia is greater. Thus, a rotation angle $\theta$ (second-order integration of angular acceleration $\omega$) generated on the right side is smaller than that generated on the left side, and thus torsion occurs at the left and right rotating shafts 4. Accordingly, to prevent the occurrence of the torsion, there is a need to make left and right accelerations $a_L$ and $a_R$ equal to each other. Here, when torques generated left and right are defined as $F_L$ and $F_R$, and flowing currents are defined as $I_L$ and $I_R$, the accelerations $a_L$ and $a_R$ meet the following formulae.

$$a_L = F_L/J_L = (T_L \times I_L)/J_L \ldots \text{(Formula 1)}$$

$$a_R = F_R/J_R = (T_R \times I_R)/J_R \quad ... \quad \text{(Formula 2)}$$

In the present embodiment, since the current is supplied to the serially connected coils 8a and 8b by the single drive amplifier, $I_L = I_R$ is established. The inertias around the rotating shafts 4 meet $J_L:J_R$ = 1.0:1.1, and a torque constant ratio between the left and right drivers is set as $T_L:T_R$ = 1.0:1.1 to make the accelerations meet $a_L = a_R$. Thereby, the torsions occurring at the left and right rotating shafts 4 can be reduced. A ratio between the inertias and a ratio between the torque constants need not be completely consistent, and roughly consistent torque constants may be set.

Here, the following formula in which the torque acting on a rotor is expressed as F, and the number of turns of the coil 8 is expressed as N is used to change the torque constant T at left and right.

$$F \propto NI \quad ... \quad \text{(Formula 3)}$$

That is, when the torque constant ratio is set as $T_L:T_R$ = 1.0:1.1, a ratio ($N_L$:NR) between the number of turns of the coil 8a and the number of turns of the coil 8b may be set as 1.0:1.1. A solid line of FIG. 4 indicates a frequency response characteristic from a drive current to an angle detection signal when the same current is applied to the coils 8a and 8b having the ratio between the numbers of turns of 1.0:1.1. In this way, the torques corresponding to magnitudes of the left and right inertias are applied. Thereby, excitation of the torsional vibration mode at the frequency f1' occurring in the case of the dotted line when the same torque is applied is controlled, and the torsional vibration mode of the lowest frequency is shifted in a direction of a higher frequency.

As described above, in the present embodiment, when the left and right inertias of the reflector 2 are different, the numbers of turns of the coils 8a and 8b constituting the two drivers are changed. Thereby, even when a difference is given to the torque constants, the vibration mode frequency around the rotating shaft 4 is shifted in the direction of a higher frequency, and the reflector 2 is more temporarily rotated, resonance transformation can be controlled.

In place of the aforementioned configuration, for example, a length of a magnetic circuit is changed, or the coils 8a and 8b are the same, and only lengths of the permanent magnets 5a and 5b are changed. Thereby, the difference may be given to the torque constants.

Third embodiment

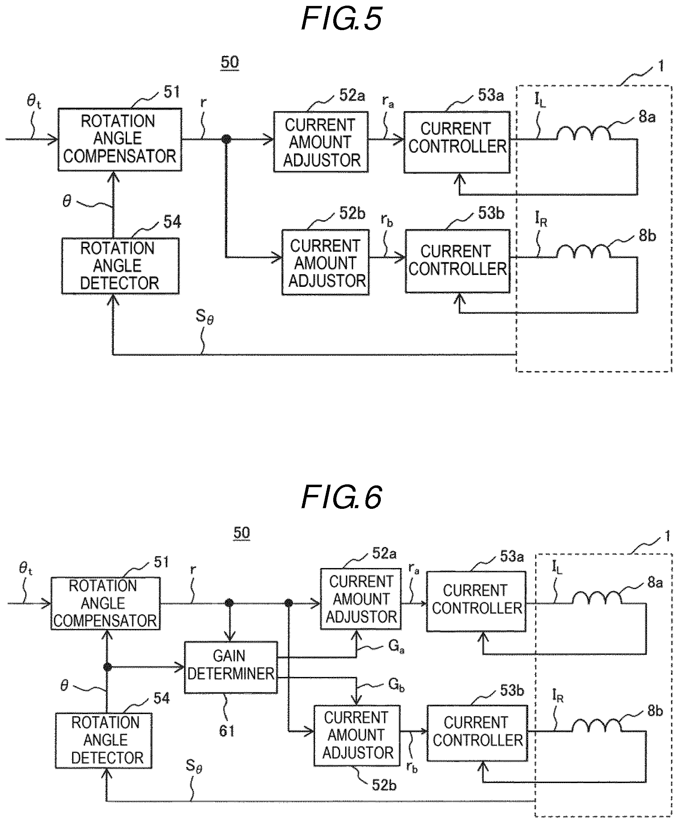

FIG. 5 is a control block diagram of a control device 50 of a galvano type light deflector 1 according to a third embodiment. A duplicate description of the features common between the embodiment and the third embodiment will be omitted. An arithmetic device such as CPU executes a program loaded on a storage device such as a semiconductor memory, whereby each function (to be described below) of the control device 50 is realized. However, this well-known technology will be described below while being appropriately omitted.

The control device 50 of the present embodiment is characterized by having current amount adjustors 52a and 52b that are provided across the reflector 2 and can independently adjust magnitudes of drive currents I supplied to the two drivers for each of the drivers. Here, in the galvano type light deflector 1 of the present embodiment, inertia around the rotating shaft 4 on the right side of the line A-A passing the center of the reflector 2 is greater than that on the left side thereof ($J_L < J_R$), but torque constants are the same left and right ($T_L = T_R$).

Next, an operation of the control device of FIG. 5 will be described. A rotation angle compensator 51 performs control arithmetic processing on a deviation $\Delta\theta$ obtained by subtracting a target angle $\theta_t$ received from a host control system (not illustrated) and a rotation angle $\theta$ of the reflector 2 which is detected by a rotation angle detector 54, and outputs the result to the current amount adjustors 52a and 52b as a scanning amount r. Adjusted scanning amount $r_a$ and $r_b$ adjusted by the current amount adjustors 52a and 52b are amplified by the current controller 53a and 53b, and flow to the coils 8a and 8b as currents $I_L$ and $I_R$. Thereby, as described above, the rotating shafts 4 are rotated by an electromagnetic force. In this case, the rotation angle detector 54 detects the rotation angle $\theta$ based on an angle detection signal $S_\theta$ output by the angle detector 9. Here, the detected rotation angle $\theta$ is fed back to the rotation angle compensator 51.

The current amount adjustors 52a and 52b set the adjusted scanning amounts $r_a$ and $r_b$ that make left and right accelerations $a_L$ and $a_R$ equal to each other such that the rotating shafts 4a and 4b are not subjected to torsion. As can be seen from Formulae 1 and 2 by which the accelerations $a_L$ and $a_R$ are obtained, when torque constants $T_L$ and $T_R$ of the two drivers are the same, a ratio $I_L$:IR of the currents flowing to both of the drivers may be equal to an inertia ratio $J_L:J_R$ to make left and right accelerations $a_L$ and $a_R$ equal. Therefore, the adjusted scanning amounts $r_a$ and $r_b$ set based on the scanning amount r can be expressed by Formulae 4 and 5 below.

$$r_a = r \times (I_L/I_R) \ldots (\text{Formula } 4)$$

$$r_b = r \times (I_R/I_L) \ldots (\text{Formula } 5)$$

Here, when the contents of the current amount adjustors 52a and 52b are ($I_L/I_R$ = Ga) of Formula 4 and ($I_R/I_L$ = Gb) of Formula 5, the adjusted scanning amounts $r_a$ and $r_b$ equalizing the accelerations $a_L$ and $a_R$ are calculated by multiplying the scanning amount r by the current gain components $G_a$ and $G_b$.

The currents $I_L$ and $I_R$ supplied to the coils 8a and 8b are controlled based on the adjusted scanning amounts $r_a$ and $r_b$ that are calculated as described above, and thereby the torsion occurring between the left and right rotating shafts 4a and 4b in the galvano type light deflector 1 in which the left and right inertia $J_L$ and $J_R$ are different can be controlled, and the frequency of the vibration mode can be improved.

In the present embodiment, the case in which the left and right inertias $J_L$ and $J_R$ are different has been described. However, even when the inertias are the same, and the torque constants $T_L$ and $T_R$ are different, the torsion occurring between the left and right rotating shafts 4a and 4b can be controlled by the same control. This is above all useful when an influence of a nonlinear characteristic of the torque depending on, particularly, the rotation angle $\theta$ is to be reduced.

Fourth embodiment

FIG. 6 is a control block diagram of a control device 50 of a galvano type light deflector 1 according to a fourth embodiment. A duplicate description of the features common between the first embodiment and the second embodiment will be omitted.

The control device 50 of the present embodiment includes a gain determiner 61 that calculates and determines the current gains $G_a$ and $G_b$, and automatically performs gain adjustment at the current amount adjustors 52a and 52b. The control device 50 of the aforementioned third embodiment is effective when the torque constant T or the inertia J is as designed, but it may not set appropriate current gains $G_a$ and $G_b$ when the torque constant T is changed by a variation in production or deterioration over time.

Therefore, in the present embodiment, even when the torque constant T or the inertia J is changed, the current gains $G_a$ and $G_b$ can be made to be automatically adjusted. A cross-sectional view of the galvano type light deflector 1 of the present embodiment is as in FIG. 3, and the frequency response characteristic when the current gains $G_a$ and $G_b$ are set to 1 is as indicated by the broken line of FIG. 4.

The galvano type light deflector 1 of the present embodiment is typically operated by targeting the target angle $\theta_t$ sent from the host control system. However, when the gain determiner 61 is made effective, and a current amount adjusting function is made effective, the galvano type light deflector 1 is operated using a plurality of unit sine waves, which generate the target angle $\theta_t$ in the control device and have the same amplitude and different frequencies, as the target angle $\theta_t$. The frequencies to be set here are several frequencies selected from the vicinity of the frequency f1' obtained by a design value in the frequency response characteristic graph of FIG. 4. Here, a gain peak value around the frequency f1' is set to B.

The gain determiner 61 calculates a gain characteristic from the scanning amount r to the rotation angle $\theta$ at each frequency with the current gains $G_a$ and $G_b$ set to 1 is calculated, thereby searching for a gain peak value B. Next, a value of the current gain $G_a$ is changed between 0.9 and 1.1 at intervals of 0.1, the gain peak value B in each case is observed. $G_b$ is set to 1/Ga. The current gains $G_a$ and $G_b$ are used as final determination values when the gain peak value B is minimized. Thereby, the vibration mode of the frequency f1' at which the rotating shafts 4 are subjected to torsion is not excited, and the frequency response characteristic indicated by the solid line of FIG. 4 can be obtained.

Consequently, according to the present embodiment, even when the torque constant or the inertia is unknown due to a variation in production or deterioration over time, the resonance frequency of the vibration mode in which the reflector 2 is twisted around the rotating shaft 4 by the torque can be improved, and thus the reflector 2 can be positioned at a high speed.

Claims

1. A light deflector for deflecting a light beam comprising:

a reflector configured to reflect the light beam;
a first gripper configured to grip one end of the reflector;

a first driver configured to rotate a first rotating shaft coupled to the first gripper;
a second gripper configured to grip the other end of the reflector; and
a second driver configured to rotate a second rotating shaft coupled to the second gripper.

2. The light deflector according to claim 1, wherein the first driver includes a first permanent magnet provided on an outer circumference of the first rotating shaft and a first coil provided on an outer circumference of the first permanent magnet,
the second driver includes a second permanent magnet provided on an outer circumference of the second rotating shaft and a second coil provided on an outer circumference of the second permanent magnet, and
when inertia for the first driver from the center of the reflector is defined as $J_1$, inertia for the second driver from the center of the reflector is defined as $J_2$, torque of the first driver is defined as $F_1$, and torque of the second driver is defined as $F_2$, the following formula is substantially established.

$$J_1 : J_2 = F_1 : F_2$$

3. The light deflector according to claim 1, wherein the first driver includes a first permanent magnet provided on an outer circumference of the first rotating shaft and a first coil provided on an outer circumference of the first permanent magnet,
the second driver includes a second permanent magnet provided on an outer circumference of the second rotating shaft, and a second coil provided on an outer circumference of the second permanent magnet, and
when inertia for the first driver from the center of the reflector is defined as $J_1$, inertia for the second driver from the center of the reflector is defined as $J_2$, a torque constant of the first driver is defined as $T_1$, and a torque constant of the second driver is defined as $T_2$, the following formula is substantially established.

$$J_1 : J_2 = T_1 : T_2$$

4. The light deflector according to claim 3, wherein when the number of turns of the first coil is defined as $N_1$, and the number of turns of the second coil is defined as $N_2$, the following formula is substantially established.

$$J_1 : J_2 = N_1 : N_2$$

5. The light deflector according to claim 1, wherein the first driver includes a first permanent magnet provided on an outer circumference of the first rotating shaft and a first coil provided on an outer circumference of the first permanent magnet,
the second driver includes a second permanent magnet provided on an outer circumference of the second rotating shaft and a second coil provided on an outer circumference of the second permanent magnet, and
when inertia for the first driver from the center of the reflector is defined as $J_1$, inertia for the second driver from the center of the reflector is defined as $J_2$, torque constants of both the drivers are equal to each other, a supply current of the first coil is defined as $I_1$, and a supply current of the second coil is defined as $I_2$, the following formula is substantially established.

$$J_1 : J_2 = I_1 : I_2$$

6. A light deflector comprising:

a rotating shaft, a reflector, a rotation angle detector, a gripper configured to mount the reflector on the rotating shaft, bearing parts configured to support the rotating shaft, and a plurality of drivers provided on the rotating shaft.

7. The light deflector according to claim 6, wherein torques generated by the drivers are different.

8. The light deflector according to claim 7, wherein torque constants of the drivers are different.

9. A light deflector control device that controls the light deflector according to any one of claims 1 to 8, the light deflector control device comprising:

current amount adjustors configured to independently adjust magnitudes of drive currents supplied to the drivers.

10. The light deflector control device according to claim 9, further comprising:

a gain determiner configured to automatically set an amplification factor of a current amount at the current amount adjustors.

## FIG.1

## FIG.2

# FIG.3

# FIG.4

## FIG.5

## FIG.6

## FIG.7

## FIG.8

# FIG.9

Europäisches
Patentamt

European
Patent Office

Office européen
des brevets

# EUROPEAN SEARCH REPORT

Application Number

EP 18 19 5246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/278984 A1 (HONDA TAKESHI [JP] ET AL) 24 October 2013 (2013-10-24) | 1,9,10 | INV. G02B26/10 H02P23/14 |
| Y | * figure 1A * <br> * paragraph [0031] * | 2-7 | |
| Y | EP 2 112 546 A2 (CANON KK [JP]) 28 October 2009 (2009-10-28) * figure 6 * | 2-7 | |
| A | US 2013/229698 A1 (HONDA TAKESHI [JP] ET AL) 5 September 2013 (2013-09-05) * figure 2 * | 1-10 | |
| A | CN 101 576 657 B (HITACHI BIYA MACHINERY CO LTD; NAT UNIV CORP NAGOYA INST TECH) 30 October 2013 (2013-10-30) * figures 3,4 * | 1-10 | |

TECHNICAL FIELDS
SEARCHED      (IPC)

G02B
H04N
H02P

The present search report has been drawn up for all claims

| Place of search | Date of completion of the search | Examiner |
|---|---|---|
| Munich | 25 March 2019 | Linke, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 19 5246

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2019

| Patent document cited in search report | | Publication date | Patent family member(s) | | Publication date |
|---|---|---|---|---|---|
| US 2013278984 | A1 | 24-10-2013 | JP WO2012115264 A1<br>US 2013278984 A1<br>WO 2012115264 A1 | | 07-07-2014<br>24-10-2013<br>30-08-2012 |
| EP 2112546 | A2 | 28-10-2009 | EP 2112546 A2<br>JP 5020880 B2<br>JP 2009265155 A<br>US 2009261773 A1 | | 28-10-2009<br>05-09-2012<br>12-11-2009<br>22-10-2009 |
| US 2013229698 | A1 | 05-09-2013 | CN 103180772 A<br>JP WO2012070610 A1<br>US 2013229698 A1<br>WO 2012070610 A1 | | 26-06-2013<br>19-05-2014<br>05-09-2013<br>31-05-2012 |
| CN 101576657 | B | 30-10-2013 | CN 101576657 A<br>JP 4990213 B2<br>JP 2009271417 A | | 11-11-2009<br>01-08-2012<br>19-11-2009 |

EPO FORM P0459

For more details about this annex : see Official Journal of the European Patent Office, No. 12/82

**REFERENCES CITED IN THE DESCRIPTION**

**Patent documents cited in the description**

- JP 7287184 A
- JP 2011154196 A